Europäisches Patentamt

European Patent Office

Office européen des brevets

(11) Veröffentlichungsnummer : **0 073 269
B1**

(12) **EUROPÄISCHE PATENTSCHRIFT**

(45) Veröffentlichungstag der Patentschrift :
**16.04.86**

(21) Anmeldenummer : **81106846.9**

(22) Anmeldetag : **02.09.81**

(51) Int. Cl.⁴ : **A 01 F 12/16**

(54) **Vorrichtung zum Abscheiden von im Erntegut mitgeführten Gegenständen, insbesondere Steine.**

(43) Veröffentlichungstag der Anmeldung :
**09.03.83 Patentblatt 83/10**

(45) Bekanntmachung des Hinweises auf die Patenterteilung : **16.04.86 Patentblatt 86/16**

(84) Benannte Vertragsstaaten :
**BE DE FR GB IT**

(56) Entgegenhaltungen :
**DE-A- 2 524 435
FR-A- 2 053 287**

(73) Patentinhaber : **DEERE & COMPANY
1 John Deere Road
Moline Illinois 61265 (US)**

(72) Erfinder : **Klimmer, Josef W.
Virchowstrasse 8
D-6660 Zweibrücken (DE)**
Erfinder : **Glaser, Fritz, Dr.
Brandenburgstrasse 3
D-6660 Zweibrücken (DE)**
Erfinder : **Velten, Werner
Goethestrasse 8
D-6662 Contwig (DE)**

(74) Vertreter : **Sartorius, Peter et al
DEERE & COMPANY European Office, Patent Department Postfach 503 Steubenstrasse 36-42
D-6800 Mannheim 1 (DE)**

**Beschreibung**

Die Erfindung bezieht sich auf eine Vorrichtung zum Abscheiden von im Erntegut mitgeführten Gegenständen, insbesondere Steine in einem Schrägfördergehäuse einer Erntebergungsmaschine, in dessen Boden eine eine Durchlaßöffnung verschließende Klappe gegen die Wirkung einer Feder verschwenkbar ist, die über ein Arretierungselement die Klappe in Schließ-Stellung hält, wobei das Arretierungselement ein Kupplungsteil aufweist, das mit der einem an der Klappe vorgesehenen Arm eine Anlagestelle bildet, wobei die Klappe von einer die Klappe sichernden Stellung über eine Totpunktlage hinaus in eine die Klappe entriegelbare Stellung verschwenkbar ist.

Es ist bereits eine Steinfalle für Dresch- und Trennmaschinen der eingangs aufgeführten Art bekannt (DE-A-2 524 435), die längs des Förderweges des Erntegutes im Bereich der Schräfördereinrichtung eine schwenkbar angeordnete Klappe aufweist, die zwischen einer Schließ-Stellung und einer Offen-Stellung gegen die Wirkung einer federbeaufschlagten Arretierungsvorrichtung verschwenkbar ist, so daß die im Erntegut mitgeführten Steine durch eine Öffnung nach unten auf den Boden abgegeben werden können. Hierzu ist oberhalb der Klappe eine Druckrolle vorgesehen, die die Aufgabe hat, ankommende Gegenstände zu ertasten und dann gegen die schwenkbare Klappe durch die Öffnung nach draußen zu drücken. Wird die Klappe in ihre offene Stellung gebracht, so wandert auch das Erntegut, das sich im Bereich der Öffnung der Klappe befindet, ebenfalls durch diese Öffnung, so daß erhebliche Erntegutverluste auftreten können. Ferner ist bei einer derartigen Anordnung der Klappe am Schrägfördergehäuse nicht immer sichergestellt, daß die Klappe bei auftretenden Hindernissen schnell genug vollständig öffnet, insbesondere dann, wenn die Klappe relativ leicht ausgebildet ist und die Lagerstelle der Klappe infolge von Verunreinigungen nicht leichtgängig genug ist, um eine Verschwenkung der Klappe mittels ihres Eigengewichtes sicherzustellen.

Ferner ist ein Mähdrescher bekannt (FR-A-2 053 287), der mit einem verstellbar gelagerten Dreschkorb ausgerüstet ist, der über verschiedene Gestänge mit einem Hebelarm einer Stellvorrichtung verbunden ist, damit die Spaltbreite insgesamt und am Auslaufende des Dreschkorbes einstellbar ist. Die sich an den Dreschkorb anschließende Steinfangmulde läßt sich über einen druckfederbeaufschlagbaren Hebel in einer Schließ-Stellung halten, der die Steinfangmulde freigibt, wenn sich eine entsprechend große Masse Steine in der Steinfangmulde angesammelt hat. Beim Öffnungsvorgang der Steinfangmulde wird jedoch über den Hebel auf die Steinfangmulde kein zusätzlicher Bewegungsimpuls übertragen.

Der Erfindung liegt die Aufgabe zugrunde, die eingangs erläuterte Vorrichtung zum Abscheiden von im Erntegut mitgeführten Gegenständen derart auszubilden und anzuordnen, daß sie auch nach längerem Einsatz ohne weiteres schnell in eine Offen-Stellung verschwenkt werden kann.

Diese Aufgabe ist dadurch gelöst worden, daß die Anlagestelle zwischen dem Kupplungsteil und dem Arm beim Schwenkvorgang der Klappe von der einen Seite der Totpunktlage auf die andere Seite der Tofpunktlage wandert und daß nach Überschreiten der Totpunktlage das Kupplungsteil mit der Klappe einen Drehmomentenarm bildet, über den die Klappe in Richtung einer Offen-Stellung beschleunigt geöffnet wird.

Durch die vorteilhafte Ausbildung und Anordnung der Arretierungsvorrichtung wird sichergestellt, daß bei einer bestimmten Stellung der Klappe die Arretierungsvorrichtung in eine Stellung bringbar ist, in der sie auf die Klappe ein positives zusätzliches Drehmoment ausübt, das die Klappe beschleunigt in eine Offen-Stellung verschwenkt. Damit wird sichergestellt, daß auch nach längerem Einsatz die Klappe ohne weiteres vollständig öffnet, auch wenn die Klappe nicht mehr so leichtgängig geht wie zu Beginn des Arbeitseinsatzes. Dies wird auch dadurch erreicht, daß beim Schwenkvorgang der Klappe die Anlagestelle zwischen dem Arretierungselement und der Klappe bzw. dem Hebel in ihrer Lage veränderbar ist.

Hierdurch können auch die auf die Arretierungsvorrichtung einwirkenden Stellkräfte auf die Klappe einwirken, und zwar solange die Klappe gegen eine der Führungsflächen des Arretierungselementes anliegt. Befindet sich die Anlagestelle beispielsweise oberhalb der Kraftlinie der Feder, so ruft die Stellkraft der Feder an der Klappe ein im entgegengesetzten Drehsinn wirkendes Drehmoment hervor, das die Klappe in Schließ-Stellung hält. Wandert jedoch die Anlagestelle zwischen Klappe und Arretierungselement unterhalb die Kraftlinie der Feder, so erzeugt die Stellkraft ein im Uhrzeigerdrehsinn wirkendes Drehmoment, das auf die Klappe wirkt und diese beschleunigt in ihre Offen-Stellung verschwenkt, solange die Klappe gegen die Führungsfläche des Arretierungselementes anliegt.

Besonders vorteilhaft ist es, wenn der Klappe eine zweite Längsöffnungen aufweisende Abdeckvorrichtung zugeordnet ist, die in der Offen-Stellung der Klappe Gegenstände durchläßt, jedoch das Erntegut zurückhält und nur dann in eine stellung wie die Klappe verschwenkbar ist, wenn größere Hindernisse auftreten, die durch die Abdeckvorrichtung zurückgehalten werden. Aus diesem Grunde ist die Abdeckvorrichtung normalerweise unabhängig von der Klappe gegen die Wirkung einer Stellkraft bzw. die einer Feder verstellbar. Es ist jedoch auch möglich, daß die Abdeckvorrichtung bei sehr großen hindernissen gemeinsam mit der Klappe gegen die Wirkung einer Stellkraft in eine Offen-Stellung verschwenkbar ist. Dabei kann die Arretierungsvorrichtung, wie bei der Klappe, auch mit der Abdeckvorrichtung zusammenwirken.

Um den Reibungswiderstand zwischen der Anlagestelle der Klappe und dem Arretierungselement klein zu halten, ist es gemäß der Erfindung vorteilhaft, daß die Abdeckvorrichtung und/oder die Klappe endseitig ein Gleitelement aufweist, das in der Schließ-Stellung von dem Kupplungsteil, das als Fangausnehmung ausgebildet ist, aufgenommen wird. Hierzu ist es vorteilhaft, daß das Gleitelement als Wälzlager ausgebildet ist. Hierzu ist es vorteilhaft, daß die Fangausnehmung eine in etwa aufrechtstehende Anlagefläche, eine sich daran anschließende, in Richtung des Wälzlagers bzw. nach vorne und unten geneigte Führungsfläche und eine sich daran anschließende, nach hinten geneigte zweite Führungsfläche aufweist. Durch das an der Klappe vorgesehene Wälzlager wird eine einwandfreie Führung der Klappe entlang den Führungsflächen am Arretierungselement gewährleistet, wenn die Klappe in eine Offen-Stellung gebracht wird. Ebenso wird durch das Wälzlager gewährleistet, daß die Klappe ohne weiteres wieder in eine Schließ-Stellung verschwenkt werden kann, wobei sie die Arretierungsvorrichtung soweit zurückschwenkt, bis die Klappe die Arretierungsvorrichtung ohne weiteres passieren kann.

Nach einem weiteren Merkmal der Erfindung kann das Kupplungsteil mit seinem oberen Ende am Schrägfördergehäuse schwenkbar angeschlossen sein und mit seinem unteren Ende über ein federbeaufschlagtes Gestänge an eine am Schrägfördergehäuse angeordnete Halterung angeschlossen sein. Je größer der Abstand zwischen der Angriffsstelle der Feder am Hebel und der Lagerstelle des Hebels am Fördergehäuse ist, desto größer ist auch das durch die Feder hervorgerufene Drehmoment, so daß hierdurch gewährleistet wird, daß die Klappe in ihrer Schließ-Stellung ratterfrei lagert. Die ratterfreie Lagerung wird auch dadurch gewährleistet, daß die obere Führungsfläche, auf der sich das Gleitelement abstützt, nach unten geneigt verlaufend ausgebildet ist, so daß hierdurch eine zusätzliche Stellkraft auf das Gleitelement bzw. das Wälzlager wirkt. Hierdurch wird auch ein selbsttätiges Nachstellen des Arretierungselementes in eine die Klappe sichernde Stellung bewirkt. Nach einem weiteren Merkmal der Erfindung ist es vorteilhaft, daß die auf das Kupplungsteil ausgeübte Stellkraft mittels einer auf dem Gestänge angeordneten einstellbaren Feder veränderbar ist. Durch diese Anordnung ist es möglich, die Schließkraft für die Arretierungsvorrichtung der Klappe kleiner oder größer auszulegen.

Vorteilhaft ist es ferner, daß die Klappe und/oder die Abdeckvorrichtung über eine Stellvorrichtung von einer Offen-Stellung in eine Schließ-Stellung bringbar ist. Hierzu ist es ferner vorteilhaft, daß der Stellvorrichtung ein Geber zugeordnet ist, der bei Erreichen einer bestimmten Stellung der Klappe und/oder der Abdeckvorrichtung eine Meßgröße erfaßt und einem der Stellvorrichtung zugeordneten Stellmotor weitergibt, der eine Rückverstellung der Klappe und/oder der Abdeckvorrichtung herbeiführt. Außerdem ist es vorteilhaft, daß die Abdeckvorrichtung aus zahlreichen parallel verlaufenden Zinken gebildet ist, die einenends am Schrägfördergehäuse des Förderkanals schwenkbar angeschlossen sind und anderenends gegen den Boden des Schrägfördergehäuses anliegen.

Nach einem weiteren Merkmal der Erfindung ist es vorteilhaft, daß im Bereich des mit der Klappe fest verbundenen Arms ein eine Fangausnehmung aufweisendes Kupplungsteil am Schrägfördergehäuse schwenkbar angeschlossen ist, dessen Fangausnehmung zur Aufnahme eines am Arm vorgesehenen Bolzens dient, wobei unter der Lagerstelle des Kupplungsteils das eine Ende der Feder angeschlossen ist, deren anderes Ende über der Lagerstelle an das Schrägfördergehäuse derart angeschlossen ist, daß die Anschlußstelle der Feder an dem Kupplungsteil beim Schwenkvorgang der Klappe von der einen Seite der Lagerstelle des Kupplungsteils auf die andere Seite der Lagerstelle wandert. Vorteilhaft ist es außerdem, daß der mit Klappe verbundene Arm mit dem Kupplungsteil ein Gelenkdreieck bildet, das in der Offen-Stellung der Klappe im Bereich der Anlagestelle zwischen Arm und Kupplungsteil gelöst ist. Ferner ist es vorteilhaft, daß die Fangausnehmung des Kuplungsteils in der Schließ-Stellung der Klappe den Bolzen aufnimmt, der mit dem an der Klappe starr angeordneten Arm fest verbunden ist. Durch die Verwendung eines am Schrägfördergehäuse vorgesehenen Kupplungsteils und eines an der Klappe vorgesehenen Arms erhält man eine einwandfrei arbeitende Arretierungsvorrichtung, wobei nach Überschreiten der Totpunktlage des Kupplungsteils die Feder, die auf den Kupplungsteil einwirkt, den Arm in Richtung der Offen-Stellung der Klappe verschwenkt, so daß die Klappe beschleunigt öffnen kann.

Anhand der Zeichnung werden zwei Ausführungsbeispiele einer Vorrichtung zum Abscheiden von im Erntegut mitgeführten Steinen nach der Erfindung erläutert.

Es zeigt

Figur 1 eine Seitenansicht der erfindungsgemäßen Klappe im Schrägfördergehäuse,

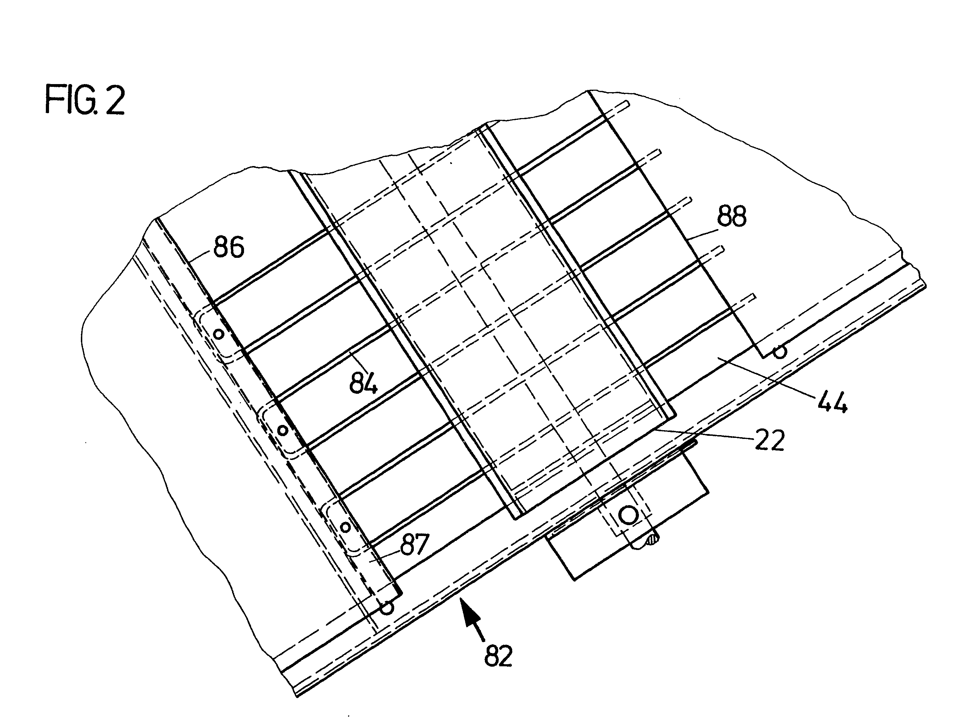

Figur 2 eine Draufsicht der Klappe und einer Abdeckvorrichtung gemäß Fig. 1,

Figur 3 ein weiteres Ausführungsbeispiel der Klappe.

In der Zeichnung ist mit 2 ein Schrägfördergehäuse eines in der Zeichnung der Einfachheit halber nicht dargestellten Mähdreschers bezeichnet, das jedoch auch für eine andere Erntebergungsmaschine eingesetzt werden kann. Im Schrägfördergehäuse 2 befindet sich eine Fördervorrichtung 4, die aus mindestens zwei parallel zueinander verlaufenden Förderketten 6 gebildet ist, die über zahlreiche parallel zueinander verlaufende Förderleisten 8 miteinander verbunden sind. Die Förderkette 6 ist über eine vordere Förderwalze 10 und eine hintere Förderwalze 12 geführt.

Der Antrieb der Förderkette 6 erfolgt über eine in der Zeichnung nicht dargestellte Antriebsvorrichtung. Das Schrägfördergehäuse 2 weist einen Boden 14, eine Oberseite 16 und den Boden 14 und die Oberseite 16 verbindende Seitenwände 18 auf. An der Einlaßseite des Schrägfördergehäuses 2 befindet sich ein Kupplungsrahmen 19 mit zwei im Bereich der oberen Seite des Kupplungsrahmens 19 vorgesehenen Kupplungshaken 20, an die ein in der Zeichnung nicht dargestelltes Schneidwerk bzw. eine Aufnahmeplattform angeschlossen werden kann. Im unteren Bereich des Kupplungsrahmens 19 sind ebenfalls Anschlußelemente für den Aufnahmetisch vorgesehen.

Zwischen der Förderwalze 10 und der Förderwalze 12 befindet sich eine Druckrolle 22, die sich in etwa über die gesamte Breite des Förderkanals des Schrägfördergehäuses 2 erstreckt und die von zwei Lagerarmen 24 aufgenommen ist, die jeweils in der entsprechenden Seitenwand 18 des Schrägfördergehäuses 2 mittels eines Gelenkbolzens 26 gelagert sind. Der Lagerarm 24 befindet sich jeweils an der Innenseite der Seitenwand 18 und kann in einem bestimmten Bereich auf- und abschwenken. Die Druckrolle 22 lagert mittels einer Welle 28 endseitig in den Lagerarmen 24. Ein jedes Ende der Welle 28 erstreckt sich durch einen im Druckgestänge 32 vorgesehenen Führungsschlitz 33 und durch einen in der entsprechenden Seitenwand 18 vorgesehenen Führungsschlitz 30, so daß eine Verstellung des Lagerarmes 24 in diesem Bereich möglich ist. Das obere Ende des Druckgestänges 32 erstreckt sich durch eine in einer Halterung 34 vorgesehene Bohrung 36 und ist mittels Muttern 38 gesichert. Die Halterung 34 ist an der jeweiligen Seitenwand 18 des Schrägfördergehäuses 2 fest angeschlossen. Zwischen einem Schenkel der Halterung 38 und der Oberseite des Lagerarmes 24 befindet sich eine Feder 40, die den Lagerarm 24 und somit die Druckrolle 22 nach unten drückt.

Die Druckrolle 22 kann beispielsweise durch eine besondere Antriebsvorrichtung angetrieben werden. Jedoch weist im vorliegenden Fall die Druckrolle 22 an ihrem Außenumfang zahlreiche sich radial erstreckende Förderrippen 42 auf, so daß das zwischen der Druckrolle 22 und dem Boden 14 des Schrägfördergehäuses 2 bewegte Erntegut die Druckrolle 22 im entgegengesetzten Uhrzeigerdrehsinn antreibt. Ist die Druckrolle 22 über die Feder 40 Druckbeaufschlagt, so liegt der Außenumfang der Druckrolle 22 über dem unteren Trum der Förderkette 6. Es ist jedoch auch möglich, daß sich die Förderrippen 42 durch den unteren Trum der Förderkette 6 erstrecken.

Unterhalb der Druckrolle 22 befindet sich eine Durchlaßöffnung 41, die sich ebenfalls über die Gesamtbreite des Schrägfördergehäuses 2 erstreckt und die in etwa die dreifache Größe des Durchmessers der Druckrolle 22 aufweist. Die im Boden 14 vorgesehene Durchlaßöffnung ist mittels einer Klappe 44 abgedeckt, die hierzu mittels mindestens zweier Wälzlager 46 auf einer Welle schwenkbar angeordnet ist. Die Klappe 44 ist so in den Boden 14 eingepaßt, daß ihre Oberfläche genau mit der Oberfläche des angrenzenden Bodens 14 fluchtet. An dem dem Wälzlager 46 gegenüberliegenden Ende weist die Klappe 44 eine Nase 48 auf, die gegen die Unterseite des Bodens 14 anliegt und somit eine weitere Aufwärtsverschwenkung der Klappe 44 begrenzt. Im Bereich des freien Endes der Klappe 44 befinden sich zwei mit Abstand zueinander angeordnete Arme 50 zur Aufnahme einer Welle 52, auf der im Bereich des äußerem Endes der Welle 52 je ein Gleitelement, beispielsweise ein Wälzlager 54, angeordnet ist. Das Wälzlager 54 wird in der die Durchlaßöffnung 41 des Bodens 14 verschließenden Stellung der Klappe 44 von je einer Fangausnehmung 56 aufgenommen, die in einem Kupplungsteil 58 vorgesehen ist.

Die Fangausnehmung 56 besteht aus einer in Richtung des Wälzlagers 54 sich erstreckenden Führungsfläche 60, die nach unten geneigt verlaufend angeordnet ist und an die sich eine weitere nach hinten geneigt verlaufende Führungsfläche 62 anschließt. An die erste Führungsfläche 60 schließt sich ferner ein mit Bezug auf den Boden 14 vertikal verlaufendes Anlageteil 64 an, das mit der Führungsfläche 60 einen nach vorne stumpfen Winkel bildet. In der die Öffnung 41 verschließenden Stellung der Klappe 44 sitzt das Wälzlager 54 in der Fangausnehmung 56 und liegt dabei gegen die Führungsfläche 60 und das Anlageteil 64 an. Im Bereich des Wälzlagers 54 ist ein Druckgestänge 66 mittels eines Gelenkbolzens 68 an dem Kupplungsteil 58 angeschlossen. Das dem Gelenkbolzen 68 gegenüberliegende Ende des Druckgestänges 66 lagert verschiebbar in einer Bohrung einer Halterung 70, die mit dem Schrägfördergehäuse 2 fest verbunden ist. Am freien Ende des Druckgestänges 66 befindet sich eine Arretierungsmutter 72, die ein Herausgleiten des Druckgestänges 66 aus der Bohrung der Halterung 70 verhindert. Im mittleren Bereich des Druckgestänges 66 ist ein Anschlagring 74 vorgesehen, der gegen zwei Kontermuttern 76 anliegt. Die Kontermuttern 76 können nach Lösen auf dem Druckgestänge 66 entweder nach links oder nach rechts verstellt werden. Zwischen dem Anschlagring 74 und der Stirnseite der Halterung 70 befindet sich eine Druckfeder 78, die das Druckgestänge 66 in Richtung des Wälzlagers 54 drückt und dadurch die Klappe 44 in ihrer Schließstellung hält.

Werden nun von dem durch das Schrägfördergehäuse 2 geleiteten Erntegut Steine oder andere Gegenstände mitgeführt, die nicht in das Dreschwerk eines Mähdreschers gelangen sollen, so werden diese Gegenstände bzw. Steine zwischen die Druckrolle 22 und die Oberfläche der Klappe 44 bewegt. Da die Feder 40 die Druckrolle 22 in Richtung der Klappe 44 drückt, wird über den Stein auf die Klappe 44 eine Stellkraft ausgeübt, die die Klappe nach unten verschwenkt und die Öffnung 41 freigibt, so daß der Stein nach außen abgeschieden werden kann. Hat der Stein die Öffnung 41 passiert, so kann über einen in der Zeichnung nicht dargestellten Geber eine Stellgröße auf einen Stellmotor übertragen werden, der eine Rückverstellung der Klappe 44 in die die Öffnung verschließende Stellung bewirkt.

Um ein Ausscheiden des über die Öffnung 41 geführten Erntegutes zu verhindern, ist eine zusätzliche Abdeckvorrichtung 82 vorgesehen, die parallel zueinander verlaufende Längsöffnungen aufweisen kann oder aus zahlreichen nebeneinander angeordneten Zinken 84 gebildet ist, die mit ihrem einen Ende am Boden 14 des Schrägfördergehäuses 2 beispielsweise schwenkbar angeschlossen sein können. Die Zinken 84 bestehen jeweils aus einem U-förmig ausgebildeten Bügel, der mittels einer Halterung 86 an einer Querachse 87 schwenkbar angeschlossen ist. Das freie Ende der Zinken 84 kann gegen die Unterseite des Bodens 14 des Schrägfördergehäuses 2 aufliegen. Es ist jedoch auch möglich, daß das Ende der Zinken 84 gegen eine Stirnkante 88 der Öffnung 41 anstößt. Die Zinken 84 sind gemeinsam auf der Querachse 87 verschwenkbar angeordnet. Hierzu kann der Querachse 87 eine in der Zeichnung nicht dargestellte Druckfeder bzw. ein Stellmotor zugeordnet sein, der der Schwenkbewegung der Zinken 84 entgegenwirkt bzw. eine Rückverstellung der Zinken 84 in die die Öffnung 41 abdeckende Stellung herbeiführt.

Die Abstände der Zinken 84 sind untereinander so gewählt, daß Steine mittlerer Größe durch die Zwischenräume der Zinken 84 durchwandern und die Klappe 44 entsprechend verstellen können. Werden jedoch größere Gegenstände mitgeführt, so werden alle Zinken 84 gemeinsam verstellt, ohne daß dabei eine Beschädigung an den Zinken 84 auftritt. Die Zinken 84 können dabei auch in vorteilhafter Weise so angeordnet sein, daß sie einzeln verstellbar an der Querachse 87 gelagert sind. In einem derartigen Fall ist der Erntegutverlust bei Verschwenken der Zinken 84 kleiner, als wenn alle Zinken 84 gemeinsam verschwenkt würden.

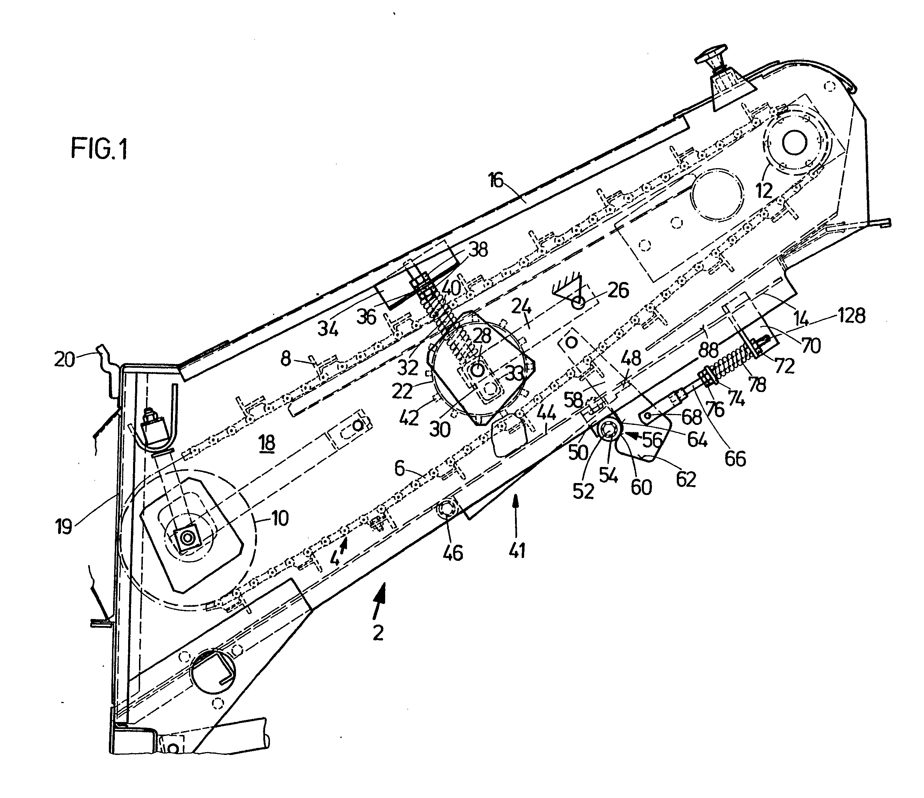

Wie im Ausführungsbeispiel gemäß Fig. 1 können auf der Querachse 87 der Zinken 84 Wälzlager vorgesehen werden.

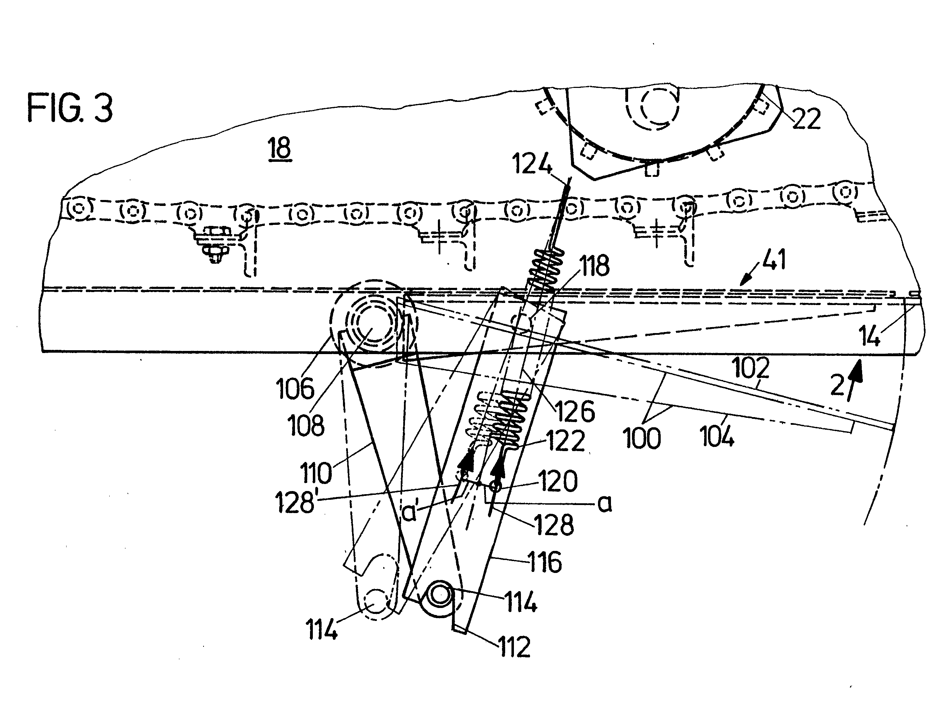

In Fig. 3 ist ein weiteres Ausführungsbeispiel einer Klappe 100 dargestellt, die die im Schrägförderkanal 2 vorgesehene Öffnung 41 abdeckt. Die Klappe 100 besteht aus einer ebenen Platte 102, die sich in etwa über die gesamte Breite des Bodens 14 des Schrägfördergehäuses 2 erstreckt und dabei die im Boden 14 vorgesehene Öffnung abdeckt. Die Platte 102 weist an ihrer unteren Seite mehrere mit Abstand zueinander angeordnete Verstärkungselemente 104 auf, die zur Stabilisierung der Platte 102 dienen. Am vorderen Ende der Verstärkungselemente 104 sowie der Platte 102 befindet sich eine Buchse 106, die beispielsweise mit den Verstärkungselementen 104 und der Platte 102 verschweißt sein kann. Die Buchse 106 lagert auf einer Welle 108, die in den Seitenwänden 18 des Schrägfördergehäuses 2 fest angeordnet ist und zur schwenkbaren Aufnahme der Buchse 106 dient. An der Buchse 106 ist jeweils im Bereich der Stirnseite der Welle 108 ein Arm 110 fest angeordnet, so daß bei einer Verschwenkung der Klappe 100 der Arm 110 mitverschwenkt wird. Am unteren Ende des Armes 110 befindet sich ein Bolzen 114, der relativ kurz ausgebildet sein kann und in einer an einem Kupplungsteiz 116 vorgesehenen Fangausnehmung 112 einführbar ist. Der Bolzen 114 kann auch als durchgehende Stange ausgebildet sein und somit den Arm 110 auf der einen Seite des Schrägfördergehäuses 2 mit dem Arm 110 auf der anderen Seite des Schrägfördergehäuses verbinden. Das Kupplungsteil 116 ist über einen Gelenkbolzen 118 jeweils an der Außenseite 18 des Schrägfördergehäuses 2 schwenkbar gelagert. Unterhalb des Gelenkbolzens 118 des Kupplungsteils 116 befindet sich eine Anschlußstelle 120, an die eine Zugfeder 122 angreift, die mit einer weiteren Anschlußstelle 124 an der Seitenwand 18 oberhalb des Gelenkbolzens 118 verbunden ist. In der in ausgezogenen Linien dargestellten Stellung des Kupplungsteils 116, die der Schließ-Stellung der Klappe 100 entspricht, befindet sich die geometrische Mittellinie 126 der Zugfeder 122 mit Bezug auf die Bewegungsrichtung des Erntegutes im Schrägfördergehäuse 2 hinter dem Gelenkbolzen 118. Auf diese Weise wirkt die durch die Mittellinie 126 verlaufende Zugkraft der Zugfeder 122 hinter dem Gelenkbolzen 118 und zieht den Arm 110 im entgegengesetzten Uhrzeigerdrehsinn nach oben, so daß die Klappe 100 in ihre Schließ-Stellung gelangt bzw. dort verharrt. Die Zugfeder 122 stellt also sicher, daß bei einer normalen Belastung der Klappe 100 keine Verschwenkung der Klappe 100 aus ihrer Schließ-Stellung erfolgt.

Tritt Überlast an der Klappe 100 auf, wenn sich unterhalb der Druckrolle 22 ein Druck aufbaut, beispielsweise durch Mitführen eines Steines, so wird über die Druckrolle 22 und den Stein auf die Klappe 100 eine Kraft ausgeübt, die eine Verschwenkung der Klappe 100 herbeiführt. Durch den Schwenkvorgang der Klappe 100 wandert die Zugmittelfeder 122 aus ihrer in ausgezogenen Linien dargestellten Stellung in eine zweite in gestrichelten Linien dargestellte Stellung. Gleichzeitig wandert auch die Mittellinie 126 der Zugfeder 122 mit Bezug auf die Bewegungsrichtung des Erntegutes nach vorne vor den Gelenkbolzen 118. Dadurch wirkt die Zugkraft der Zugfeder 122 so, daß die Klappe 100 beschleunigt geöffnet wird. In Fig. 3 ist die Kraftlinie einmal mit 128 und einmal mit 128' zum Gelenkbolzen 118 mit a bzw. a' angegeben. Das zur Verstellung der Klappe 100 in eine Schließ-Stellung erforderliche Moment wird aus der Zugkraft mal Hebelarm a gebildet, während das für den Öffnungsvorgang notwendige Drehmoment aus der Zugkraft mal Hebelarm a' gebildet wird. Hat die Klappe 100 ihre Offen-Stellung erreicht, so kann sie in dieser Stellung mit dem Boden 14 einen Winkel von ca.

90° einschließen. In dieser Stellung ist der Bolzen 114 vollständig aus der Fangausnehmung 112 herausgeführt. Es besteht neben einer manuellen Verstellung der Klappe 100 auch die Möglichkeit, die Klappe mittels eines Elektromotors oder einer hydraulischen Einrichtung in die Schließ-Stellung zu verschwenken, sobald die Gegenstände die Öffnung passiert haben. Hierzu kann an der Klappe 100 oder auch an der Abdeckvorrichtung 82 ein elektrisches bzw. hydraulisches Steuergerät angeschlossen sein, das die Klappe 100 automatisch in ihre Schließ-Stellung verschwenkt, sobald hierzu ein entsprechender Impuls von der Bedienungsperson ausgelöst worden ist. Es ist auch möglich, daß dem Steuergerät ein Geber zugeordnet ist, der bei Erreichen einer bestimmten Stellung der Klappe 100 oder der Abdeckvorrichtung 82 eine Meßgröße erfaßt und diese dem Stellmotor weiterleitet, der dann eine Rückverstellung der Klappe 100 oder der Abdeckvorrichtung 82 in die Schließ-Stellung herbeiführt. Der Geber kann hierzu im Bereich der Endlage der Klappe 100 vorgesehen werden, so daß bei Anlage der Klappe gegen den Geber der Schaltimpuls ausgelöst wird. Es ist auch möglich, den Geber im Bereich der Öffnung 41 vorzusehen und diesen mit einem Verzögerungsschalter zu verbinden, so daß nach einer bestimmten Zeit grundsätzlich die Klappe 100 ihre Schließ-Stellung erreicht.

**Patentansprüche**

1. Vorrichtung zum Abscheiden von im Erntegut mitgeführten Gegenständen, insbesondere Steine in einem Schrägfördergehäuse (2) einer Erntebergungsmaschine, in dessen Boden (14) eine eine Durchlaßöffnung (41) verschließende Klappe (44, 100) gegen die Wirkung einer Feder (78, 122) verschwenkbar ist, die über ein Arretierungselement die Klappe (44, 100) in Schließ-Stellung hält, wobei das Arretierungselement ein Kupplungsteil (58, 116) aufweist, das mit einem an der Klappe vorgesehenen Arm (50, 110) eine Anlagestelle bildet, wobei die Klappe (44, 100) von einer die Klappe (44, 100) sichernden Stellung über eine Totpunktlage hinaus in eine die Klappe entriegelbare Stellung verschwenkbar ist, dadurch gekennzeichnet, daß die Anlagestelle zwischen dem Kupplungsteil (58, 116) und dem Arm (50, 110) beim Schwenkvorgang der Klappe von der einen Seite der Totpunktlage auf die andere Seite der Totpunktlage wandert und daß nach Überschreiten der Totpunktlage das Kupplungsteil (58, 116) mit der Klappe einen Drehmomentenarm bildet, über den die Klappe durch die Federkraft in Richtung einer Offen-Stellung beschleunigt geöffnet wird.

2. Vorrichtung nach Anspruch 1, dadurch gekennzeichnet, daß der Klappe (44) eine zweite Längsöffnungen aufweisende Abdeckvorrichtung (82) zugeordnet ist, die in der Offen-Stellung der Klappe Gegenstände durchläßt und Erntegut zurückhält und nur bei größeren Gegenständen in eine Offen-Stellung verstellbar ist.

3. Vorrichtung nach Anspruch 1 und 2, dadurch gekennzeichnet, daß die Abdeckvorrichtung (82) unabhängig von der Klappe (44) gegen die Wirkung einer Stellkraft bzw. die einer Feder verstellbar ist.

4. Vorrichtung nach Anspruch 2, dadurch gekennzeichnet, daß die Abdeckvorrichtung (82) und/oder die Klappe (44) endseitig ein Gleitelement (Wälzlager 54) aufweist, das in der Schließ-Stellung von dem Kupplungsteil (58), das als Fangausnehmung (56) ausgebildet ist, aufgenommen wird.

5. Vorrichtung nach Anspruch 6, dadurch gekennzeichnet, daß das Gleitelement als Wälzlager (54) ausgebildet ist.

6. Vorrichtung nach einem oder mehreren der vorherigen Ansprüche, dadurch gekennzeichnet, daß die Fangausnehmung (56) eine in etwa aufrechtstehende Anlagefläche (Anlageteil 64), eine sich daran anschließende, in Richtung des Wälzlagers bzw. nach vorne und unten geneigte Führungsfläche (60) und eine sich daran anschließende, nach hinten geneigte Führungsfläche (62) aufweist.

7. Vorrichtung nach einem oder mehreren der vorherigen Ansprüche, dadurch gekennzeichnet, daß das Kupplungsteil (58) mit seinem oberen Ende am Schrägfördergehäuse (2) schwenkbar angeschlossen ist und mit seinem unteren Ende über ein federbeaufschlagtes Gestänge (Druckgestänge 66) an eine am Schrägfördergehäuse (2) angeordnete Halterung (70) angeschlossen ist.

8. Vorrichtung nach einem oder mehreren der vorherigen Ansprüche, dadurch gekennzeichnet, daß die auf das Kupplungsteil (58) ausgeübte Stellkraft mittels einer auf dem Gestänge (Druckgestänge 66) angeordneten einstellbaren Feder (Druckfeder) veränderbar ist.

9. Vorrichtung nach einem oder mehreren der vorhergehenden Ansprüche, dadurch gekennzeichnet, daß die Klappe (44) und/oder die Abdeckvorrichtung (82) über eine Stellvorrichtung von einer Offen-Stellung in eine Schließ-Stellung bringbar ist.

10. Vorrichtung nach einem oder mehreren der vorhergehenden Ansprüche, dadurch gekennzeichnet, daß der Stellvorrichtung ein Geber zugeordnet ist, der bei Erreichen einer bestimmten Stellung der Klappe (44) und/oder der Abdeckvorrichtung (82) eine Meßgröße erfaßt und einem der Stellvorrichtung zugeordneten Stellmotor weitergibt, der eine Rückverstellung der Klappe und/oder der Abdeckvorrichtung herbeiführt.

11. Vorrichtung nach einem oder mehreren der vorhergehenden Ansprüche, dadurch gekennzeichnet, daß die Abdeckvorrichtung (82) aus zahlreichen parallel verlaufenden Zinken (84) gebildet ist, die einenends am Schrägfördergehäuse (2) des Förderkanals schwenkbar angeschlossen sind und anderenends gegen den Boden (14) des Schrägfördergehäuses anliegen.

12. Vorrichtung nach einem oder mehreren der vorhergehenden Ansprüche, dadurch gekennzeichnet, daß im Bereich des mit der Klappe (100) fest verbundenen Arms (110) ein eine Fangausnehmung (112) aufweisendes Kupplungsteil (116) am Schrägfördergehäuse (2) schwenkbar angeschlossen ist, dessen Fangausnehmung (112) zur Aufnahme eines am Arm (110) vorgesehenen Bolzens (114) dient, wobei unter der Lagerstelle des Kupplungsteils das eine Ende der Feder (122) angeschlossen ist, deren anderes Ende über der Lagerstelle an das Schrägfördergehäuse derart angeschlossen ist, daß die Anschlußstelle (120) der Feder an dem Kupplungsteil beim Schwenkvorgang der Klappe (100) von der einen Seite der Lagerstelle des Kupplungsteils auf die andere Seite der Lagerstelle wandert.

13. Vorrichtung nach einem oder mehreren der vorhergehenden Ansprüche, dadurch gekennzeichnet, daß der mit der Klappe (100) verbundene Arm (110) mit dem Kupplungsteil (116) ein Gelenkdreieck bildet, das in der Offen-Stellung der Klappe im Bereich der Anlagestelle zwischen Arm und Kupplungsteil (116) gelöst ist.

14. Vorrichtung nach einem oder mehreren der vorhergehenden Ansprüche, dadurch gekennzeichnet, daß die Fangausnehmung (112) des Kupplungsteils (116) in der Schließ-Stellung der Klappe (100) den Bolzen (114) aufnimmt, der mit dem an der Klappe (100) starr angeordneten Arm (110) fest verbunden ist.

## Claims

1. Apparatus for separating out objects which are entrained in crop material, in particular stones in an inclined conveyor housing (2) of a crop pick-up machine, in the bottom (14) of which a flap (44, 100) for closing a through opening (41) is pivotable against the force of a spring (78, 122) which holds the flap (44, 100) in a closed position by way of an arresting element, wherein the arresting element has a coupling portion (58, 116) which forms a contact location with an arm (50, 110) provided on the flap, wherein the flap (44, 100) is pivotable from a position in which the flap (44, 100) is secured, beyond a dead centre position, into a position for releasing the flap, characterised in that the contact location between the coupling portion (58, 116) and the arm (50, 110), upon pivotable movement of the flap, moves from on side of the dead centre position to the other side of the dead centre position and that, after having passed through the dead centre position, the coupling portion (58, 116), with the flap, forms a torque arm by way of which the flap is opened in an accelerated mode by the spring force in the direction of an open position.

2. Apparatus according to claim 1 characterised in that associated with the flap (44) is a second cover means (82) which has longitudinal openings and which in the open position of the flap allows objects to pass through and holds back crop material and which is displaceable into an open position only in relation to larger objects.

3. Apparatus according to claim 1 and claim 2 characterised in that the cover means (82) is displaceable independently of the flap (44) against the effect of a control force or that of a spring.

4. Apparatus according to claim 2 characterised in that the cover means (82) and/or the flap (44) has a sliding element (rolling bearing 54) at the end, which element is accommodated in the closed position by the coupling portion (58) which is in the form of a catch recess (56).

5. Apparatus according to claim 4 characterised in that the sliding element is formed as a rolling bearing (54).

6. Apparatus according to one or more of the preceding claims characterised in that the catch recess (56) has a substantially upright contact surface (contact portion 64), an adjoining guide surface (60) which is inclined in the direction of the rolling bearing or forwardly and downwardly, and an adjoining, rearwardly inclined guide surface (62).

7. Apparatus according to one or more of the preceding claims characterised in that the coupling portion (58) is pivotably connected by its upper end to the inclined conveyor housing (2) and with its lower end is connected by way of a spring loaded linkage (compression linkage 66) to a holder (70) disposed on the inclined conveyor housing (2).

8. Apparatus according to one or more of the preceding claims characterised in that the control force which is applied to the coupling portion (58) is variable by means of an adjustable spring (compression spring) disposed on the linkage (compression linkage 66).

9. Apparatus according to one or more of the preceding claims characterised in that the flap (44) and/or the cover means (82) can be moved from an open position into a closed position by way of a control means.

10. Apparatus according to one or more of the preceding claims characterised in that associated with the control means is a sender which, when a given position of the flap (44) and/or the cover means (82) is reached, detects a measurement parameter and transmits it to a control motor which is associated with the control means and which causes reverse movement of the flap and/or the cover means.

11. Apparatus according to one or more of the preceding claims characterised in that the cover means (82) is formed from numerous tines (84) which extend in parallel relationship and which at one end are pivotally connected to the inclined conveyor housing (2) of the conveyor passage and at the other end bear against the bottom (14) of the inclined conveyor housing.

12. Apparatus according to one or more of the preceding claims characterised in that in the region of the arm (110) which is fixedly connected to the flap (100) a coupling portion (116) having a catch recess (112) is pivotally connected to the inclined conveyor housing (2), the catch recess (112) thereof serving to accommodate a pin (114) which is provided on the arm (110), wherein one end of the spring (122) is connected beneath the mounting location of the coupling portion while the other end thereof is connected by way of the mounting location to the inclined conveyor housing in such a way that the location (120) at which the spring is connected to the coupling portion moves from one side of the mounting location of the coupling portion to the other side of the mounting location, upon the pivotal movement of the flap (100).

13. Apparatus according to one or more of the preceding claims characterised in that the arm (110) which is connected to the flap (100), with the coupling portion (116), forms a linkage triangle which is opened up, in the open position of the flap, in the region of the contact location between the arm and the coupling portion (116).

14. Apparatus according to one or more of the preceding claims characterised in that the catch recess (112) of the coupling portion (116), in the closed position of the flap (100), accommodates the pin (114) which is fixedly connected to the arm (110) rigidly arranged on the flap (100).

## Revendications

1. Dispositif pour séparer des corps étrangers entraînés avec des produits de récolte, en particulier des pierres, dans un carter de transporteur-élévateur (2) d'une machine de récolte, dans le fond (14) duquel un volet (44, 100) obturant un orifice de passage (41) peut pivoter en antagonisme à l'action d'un ressort (78, 122), qui maintient le volet (44, 100) en position de fermeture par l'intermédiaire d'un élément de verrouillage lequel présente une partie formant organe d'accouplement (58, 116) qui ménage avec un bras (50, 110) prévu sur ce volet un point d'application, ledit volet (44, 100) pouvant pivoter depuis une position de verrouillage du volet (44, 100), en passant par une position de point mort, jusque dans une position de déverrouillage du volet caractérisé en ce que le point d'application entre la partie ou l'organe d'accouplement (58, 116) et le bras (50, 110) passé, lors du pivotement du volet, d'un côté de la position de point mort à l'autre côté de cette position de point mort, et en ce que, après franchissement de la position de point mort, la partie ou l'organe d'accouplement (58, 116) forme avec le volet un bras d'application d'un couple par lequel le volet est ouvert de façon accélérée en direction d'une position d'ouverture, sous l'effet de la force exercée par le ressort.

2. Dispositif suivant la revendication 1, caractérisé en ce qu'il est prévu, en combinaison avec le volet (44), un second dispositif de recouvrement (82) comportant des orifices longitudinaux, qui dans la position ouverte du volet laisse passer les objets et retient les produits de récolte, et qui ne peut être amené dans une position ouverte que dans le cas d'objets de plus grandes dimensions.

3. Dispositif suivant les revendications 1 et 2, caractérisé en ce que le dispositif de recouvrement (82) est déplaçable indépendamment du volet (44) en antagonisme à l'action d'une force de positionnement ou d'un ressort.

4. Dispositif suivant la revendication 2, caractérisé en ce que le dispositif de recouvrement (82) et/ou le volet (44) portent à leur extrémité un élément formant coulisseau (roulement 54) qui dans la position de fermeture est reçu par la partie ou l'organe d'accouplement (58), qui se présente sous la forme d'un logement de réception (56).

5. Dispositif suivant la revendication 4, caractérisé en ce que l'élément formant coulisseau se présente sous la forme d'un roulement (54).

6. Dispositif suivant une ou plusieurs des revendications précédentes, caractérisé en ce que le logement de réception (56) comporte une surface d'application sensiblement verticale (partie d'application 64), une surface de guidage (60) se raccordant à la précédente, inclinée en direction du roulement ou vers l'avant et vers le bas, et une surface de guidage (62) inclinée vers l'arrière et se raccordant à la précédente.

7. Dispositif suivant une ou plusieurs des revendications précédentes, caractérisé en ce que la partie ou l'organe d'accouplement (58) est relié de façon pivotante, par son extrémité supérieure, au carter de transporteur-élévateur (2), et est relié par son extrémité inférieure à un support (70) prévu sur le carter de transporteur-élévateur (2) par l'intermédiaire d'une tringlerie soumis à l'action d'un ressort (tringlerie de pression 66).

8. Dispositif suivant une ou plusieurs des revendications précédentes, caractérisé en ce que la force de positionnement exercée sur la partie ou l'organe d'accouplement (58) peut être modifiée au moyen d'un ressort réglable (ressort de compression) prévu sur la tringlerie (tringlerie de pression 66).

9. Dispositif suivant une ou plusieurs des revendications précédentes, caractérisé en ce que le volet (44) et/ou le dispositif de recouvrement (82) peuvent être amenés d'une position d'ouverture à une position de fermeture au moyen d'un dispositif de positionnement.

10. Dispositif suivant une ou plusieurs des revendications précédentes, caractérisé en ce qu'il est prévu, en combinaison avec le dispositif de positionnement, un détecteur qui, lorsque le volet (44) et/ou le dispositif de recouvrement (82) atteignent une position déterminée, engendre une grandeur de mesure et la transmet à un dispositif d'actionnement conjugué au dispositif de positionnement, ce dispositif d'actionnement provoquant alors un rappel en arrière du volet et/ou du dispositif de recouvrement.

11. Dispositif suivant une ou plusieurs des revendications précédentes, caractérisé en ce que le dispositif de recouvrement (82) est constitué par un grand nombre de dents (84) s'étendant parallèlement entre elles qui sont reliées par une extrémité de façon pivotante au carter de transporteur-élévateur (2) du convoyeur et qui sont appliquées par leur extrémité contre le fond (14) du carter de transporteur-élévateur.

12. Dispositif suivant une ou plusieurs des revendications précédentes, caractérisé en ce qu'un organe d'accouplement (116) présentant un logement de réception (112) est relié de façon pivotante au carter de transporteur-élévateur (2) au voisinage du bras (110) relié rigidement au volet (100), le logement de réception (112) de cet organe servant à la réception d'un axe ou doigt (114) prévu dans le bras (110), une extrémité du ressort (122) étant reliée à un point situé au-dessous du point de montage à pivotement de l'organe d'accouplement, tandis que l'autre extrémité de ce ressort est reliée au carter de transporteur-élévateur au-dessus de ce point de montage à pivotement, de telle sorte que le point de raccordement (120) du ressort avec l'organe d'accouplement passe, lors du mouvement de pivotement du volet (100), d'un côté à l'autre du point de montage à pivotement de cet organe d'accouplement.

13. Dispositif suivant une ou plusieurs des revendications précédentes, caractérisé en ce que le bras (110) relié au volet (100) forme avec l'organe d'accouplement (116) un triangle articulé qui, dans la position ouverte du volet, est interrompu dans la partie voisine du point d'application entre le bras et l'organe d'accouplement (116).

14. Dispositif suivant une ou plusieurs des revendications précédentes, caractérisé en ce que, dans la position de fermeture du volet (100), le logement de réception (112) de l'organe d'accouplement (116) reçoit l'axe ou le doigt (114) relié rigidement au bras (110), lui-même monté rigidement sur le volet (100).

FIG.1

FIG. 2

FIG. 3

0 073 269